(19) Europäisches Patentamt
European Patent Office
Office européen des brevets

(11) EP 4 691 607 A1

(12) EUROPEAN PATENT APPLICATION
published in accordance with Art. 153(4) EPC

(43) Date of publication:
**11.02.2026 Bulletin 2026/07**

(21) Application number: **24778805.2**

(22) Date of filing: **15.02.2024**

(51) International Patent Classification (IPC):
***B01D 61/00*** (2006.01) ***C02F 1/44*** (2023.01)
***C08G 65/02*** (2006.01) ***C08G 65/26*** (2006.01)

(52) Cooperative Patent Classification (CPC):
**B01D 61/00; C02F 1/44; C08G 65/02; C08G 65/26**

(86) International application number:
**PCT/JP2024/005363**

(87) International publication number:
**WO 2024/202660 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 JP 2023047557**
**23.08.2023 JP 2023135782**

(71) Applicant: **Nippon Shokubai Co., Ltd.**
**Osaka-shi, Osaka 541-0043 (JP)**

(72) Inventors:
- **MATONO, Akitoshi**
**Kawasaki-shi, Kanagawa 210-0865 (JP)**
- **TOKUSHIMA, Hiroki**
**Kawasaki-shi, Kanagawa 210-0865 (JP)**
- **FUJII, Yudai**
**Suita-shi, Osaka 564-0034 (JP)**
- **OKIHANA, Chisa**
**Kawasaki-shi, Kanagawa 210-0865 (JP)**
- **NAGASE, Masafumi**
**Kawasaki-shi, Kanagawa 210-0865 (JP)**

(74) Representative: **Hoffmann Eitle**
**Patent- und Rechtsanwälte PartmbB**
**Arabellastraße 30**
**81925 München (DE)**

(54) **DRAW SOLUTE, DRAW SOLUTION, AND WATER TREATMENT METHOD**

(57) Provided are a novel draw solute which can be suitably used for the forward osmosis membrane method, a draw solution containing the draw solute, and a water treatment method using the draw solution. A draw solute according to an embodiment of the present invention contains a polymer having an amine compound-derived structure and at least one structure selected from the group consisting of an oxyalkylene structure derived from an alkylene oxide having from 2 to 20 carbon atoms and a substituted oxyethylene structure derived from a glycidyl ether compound.

EP 4 691 607 A1

## Description

### Technical Field

The present invention relates to a draw solute, a draw solution, and a water treatment method.

### Background Art

A forward osmosis membrane method is a method of bringing two solutions having different concentrations into contact with each other through a semipermeable membrane and utilizing a phenomenon in which a solvent moves from a side having a low osmotic pressure to a side having a high osmotic pressure, and can be utilized for separation of components of a solution, and the like. As compared with a reverse osmosis membrane method in which a solution is forcibly passed through a membrane by applying pressure to the solution against osmotic pressure, the forward osmosis membrane method in which membrane filtration is performed using osmotic pressure easily saves energy, and is expected to be applied to water treatment such as seawater desalination and power generation.

When water treatment is performed using the forward osmosis membrane method, a solution (draw solution) having a higher osmotic pressure than that of a solution targeted to be treated (solution to be treated) is used to move a solvent (water) from the side of the solution to be treated side to the side of the draw solution side through a semipermeable membrane. As described above, since it is necessary to recover the solvent (water) from the draw solution after the solvent is moved from the side of the solution to be treated to the side of the draw solution through the semipermeable membrane, the draw solution needs to have properties that enable easy separation of the solvent, and various osmotic pressure inducing substances (draw solutes) for preparing such a draw solution have been studied.

Patent Document 1 proposes the use, as a temperature-sensitive water absorbing agent (draw solute), of a block copolymer having a glycerin skeleton as a basic skeleton and containing an ethylene oxide group as a hydrophilic moiety and a group consisting of propylene oxide and/or butylene oxide as a hydrophobic moiety.

Patent Document 2 proposes a draw solute for the forward osmosis membrane method, which contains an addition polymer obtained by addition polymerization of an alkylene oxide having from 2 to 10 carbon atoms to polyethyleneimine.

In the future, from the viewpoint of expanding the application range of the forward osmosis membrane method to various techniques, it is desired to increase the variation of the draw solute so that an optimal draw solution can be selected according to the process.

### Citation List

#### Patent Document

Patent Document 1: JP 6172385 B

Patent Document 2: JP 7162308 B

### Summary of Invention

#### Technical Problem

An object of the present invention is to provide a novel draw solute which can be suitably used for the forward osmosis membrane method, a draw solution containing the draw solute, and a water treatment method using the draw solution.

#### Solution to Problem

[1] A draw solute according to an embodiment of the present invention contains a polymer having an amine compound-derived structure and at least one structure selected from the group consisting of an oxyalkylene structure derived from an alkylene oxide having from 2 to 20 carbon atoms and a substituted oxyethylene structure derived from a glycidyl ether compound.

[2] In the draw solute according to [1], the amine compound-derived structure may be represented by General Formula (1a) or General Formula (1b):

[Chem. 1]

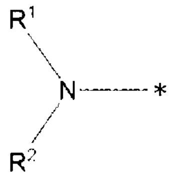 (1a) 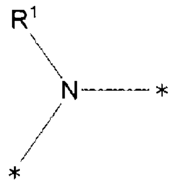 (1b)

where $R^1$ and $R^2$ in General Formulae (1a) and (1b) are organic groups and may contain a heteroatom, and $R^1$ and $R^2$ in General Formula (1a) may form a ring structure; and further, a notation "N-*" in General Formulae (1a) and (1b) means a structure from a nitrogen atom to a terminal of a bond extending therefrom.

[3] In the draw solute according to [1], the amine compound-derived structure may be represented by General Formula (1c):

[Chem. 2]

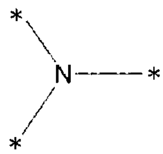 (1c)

where a notation "N-*" in General Formula (1c) means a structure from a nitrogen atom to a terminal of a bond extending therefrom.

[4] In the draw solute according to any one of [1] to [3], the glycidyl ether compound may be represented by General Formula (2), and the substituted oxyethylene structure derived from a glycidyl ether compound may be represented by General Formula (3):

[Chem. 3]

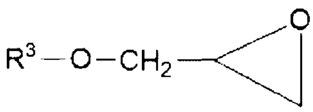 (2)

where $R^3$ in General Formula (2) is an organic group, and may contain a heteroatom,

[Chem. 4]

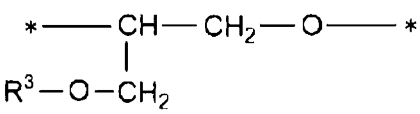 (3)

where $R^3$ in General Formula (3) is an organic group, and may contain a heteroatom; and further, in General Formula (3), a notation "C-*" means a structure from a carbon atom to a terminal of a bond extending therefrom, and a notation "O-*" means a structure from an oxygen atom to a terminal of a bond extending therefrom.

[5] The draw solute according to any one of [1] to [4] may have a viscosity at 25°C of 500 mPa·s or less.

[6] A draw solution according to an embodiment of the present invention contains the draw solute described in any one of [1] to [5].

[7] A water treatment method according to an embodiment of the present invention uses the draw solution described in

[6].

Advantageous Effects of Invention

The present invention can provide a novel draw solute which can be suitably used for the forward osmosis membrane method, a draw solution containing the draw solute, and a water treatment method using the draw solution.

Description of Embodiments

Hereinafter, a preferred embodiment of the present invention will be described in detail, but the present invention is not limited thereto.

Draw Solute

A draw solute according to embodiments of the present invention contains a polymer having an amine compound-derived structure and at least one structure selected from the group consisting of an oxyalkylene structure derived from an alkylene oxide having from 2 to 20 carbon atoms and a substituted oxyethylene structure derived from a glycidyl ether compound. The polymer may be only one type of polymer or two or more types of polymers.

A content proportion of the polymer in the draw solute according to embodiments of the present invention is preferably from 50 mass% to 100 mass%, more preferably from 70 mass% to 100 mass%, still more preferably from 90 mass% to 100 mass%, particularly preferably from 95 mass% to 100 mass%, and most preferably 100 mass%.

The draw solute according to embodiments of the present invention may contain any appropriate component other than the polymer as long as the effects of the present invention are not impaired.

Any appropriate number average molecular weight Mn may be adopted as a number average molecular weight Mn of the polymer in the draw solute according to embodiments of the present invention as long as the effects of the present invention are not impaired. From the viewpoint of further exhibiting the effects of the present invention, the number average molecular weight Mn of the polymer in the draw solute according to embodiments of the present invention is preferably from 100 to 5000, more preferably from 200 to 3000, still more preferably from 300 to 2000, particularly preferably from 400 to 1500, and most preferably from 500 to 1000.

A preferred embodiment of the amine compound-derived structure is represented by General Formula (1a) or General Formula (1b).

[Chem. 5]

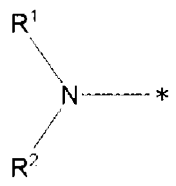 (1a)

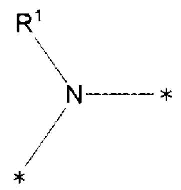 (1b)

$R^1$ and $R^2$ in General Formulae (1a) and (1b) are organic groups and may contain a heteroatom, and $R^1$ and $R^2$ in General Formula (1a) may form a ring structure. Examples of the heteroatom include an oxygen atom, a nitrogen atom, a sulfur atom, a silicon atom, and a phosphorus atom. $R^1$ and $R^2$ may be the same or different.

Specific examples of $R^1$ and $R^2$ include alkyl groups such as a methyl group, an ethyl group, a propyl group, an isopropyl group, a butyl group, a 2-pentyl group, a 3-pentyl group, a neopentyl group, a hexyl group, an octyl group, a 2-ethylhexyl group, a nonyl group, a decyl group, a pentadecyl group, a cetyl group, a lauryl group, a stearyl group, a cyclopropyl group, a cyclobutyl group, a cyclopentyl group, a cyclohexyl group, and a 1-adamantane group; and aryl groups such as a phenyl group, a benzyl group, a phenylpropyl group, a phenylbutyl group, a 1,1-dimethyl-2-phenylethyl group, and a 3,4-dimethylbenzyl group.

Further, the notation "N-*" in General Formulae (1a) and (1b) means a structure from a nitrogen atom to a terminal of a bond extending therefrom. Therefore, * may be any appropriate group, but is typically a group having at least one structure selected from the group consisting of an oxyalkylene structure derived from an alkylene oxide having from 2 to 20 carbon atoms and a substituted oxyethylene structure derived from a glycidyl ether compound.

Another preferred embodiment of the amine compound-derived structure is represented by General Formula (1c).

[Chem. 6]

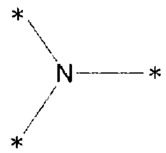

(1c)

The notation "N-*" in General Formula (1c) means a structure from a nitrogen atom to a terminal of a bond extending therefrom. Therefore, * may be any appropriate group, but is typically a group having at least one structure selected from the group consisting of an oxyalkylene structure derived from an alkylene oxide having from 2 to 20 carbon atoms and a substituted oxyethylene structure derived from a glycidyl ether compound, as in General Formulae (1a) and (1b).

The oxyalkylene structure derived from an alkylene oxide having from 2 to 20 carbon atoms is a structure formed by adding an alkylene oxide having from 2 to 20 carbon atoms to an amine compound, and is an oxyalkylene structure having from 2 to 20 carbon atoms, preferably an oxyalkylene structure having from 2 to 10 carbon atoms, more preferably an oxyalkylene structure having from 2 to 8 carbon atoms, still more preferably an oxyalkylene structure having from 2 to 6 carbon atoms, and particularly preferably an oxyalkylene structure having from 2 to 4 carbon atoms. Typical examples of such an oxyalkylene structure include an oxyethylene structure, an oxypropylene structure, and an oxybutylene structure.

The glycidyl ether compound is preferably represented by General Formula (2).

[Chem. 7]

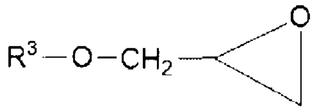

(2)

$R^3$ in General Formula (2) is an organic group, and may contain a heteroatom. Examples of the heteroatom include an oxygen atom, a nitrogen atom, a sulfur atom, a silicon atom, and a phosphorus atom.

Specific examples of $R^3$ include alkyl groups such as a methyl group, an ethyl group, a propyl group, an isopropyl group, a butyl group, a 2-pentyl group, a 3-pentyl group, a neopentyl group, a hexyl group, an octyl group, a 2-ethylhexyl group, a nonyl group, a decyl group, a pentadecyl group, a cetyl group, a lauryl group, a stearyl group, a cyclopropyl group, a cyclobutyl group, a cyclopentyl group, a cyclohexyl group, and a 1-adamantane group; and aryl groups such as a phenyl group, a benzyl group, a phenylpropyl group, a phenylbutyl group, a 1,1-dimethyl-2-phenylethyl group, and a 3,4-dimethylbenzyl group.

The substituted oxyethylene structure derived from a glycidyl ether compound is preferably represented by General Formula (3).

[Chem. 8]

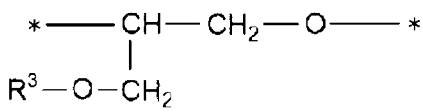

(3)

$R^3$ in General Formula (3) is the same as $R^3$ in General Formula (2).

In General Formula (3), the notation "C-*" means a structure from a carbon atom to a terminal of a bond extending therefrom, and the notation "O-*" means a structure from an oxygen atom to a terminal of a bond extending therefrom.

Specific embodiments of the polymer contained in the draw solute according to embodiments of the present invention include:

(a polymer of Embodiment 1) an embodiment having a structure in which an alkylene oxide having from 2 to 20 carbon atoms is added to an amine compound;

(a polymer of Embodiment 2) an embodiment having a structure in which a glycidyl ether compound is added to an amine compound; and

(a polymer of Embodiment 3) an embodiment having a structure in which both an alkylene oxide having from 2 to 20 carbon atoms and a glycidyl ether compound are added to an amine compound.

The polymer of Embodiment 1 has a structure in which an oxyalkylene structure derived from an alkylene oxide having from 2 to 20 carbon atoms is repeatedly bonded to a nitrogen atom of an amino group in an amine compound in a single array (in the case of using one type of alkylene oxide), a block array or a random array (in the case of using two or more types of alkylene oxides). The polymer of Embodiment 1 may have the structure described above, and a production method therefor is not particularly limited.

The number of repetitions (average number of moles added) of the oxyalkylene structure in the polymer of Embodiment 1 is preferably from 1 mol to 200 mol, more preferably from 5 mol to 100 mol, still more preferably from 5 mol to 80 mol, still more preferably from 5 mol to 70 mol, yet still more preferably from 5 mol to 60 mol, yet still more preferably from 10 mol to 50 mol, particularly preferably from 10 mol to 40 mol, and most preferably from 10 mol to 30 mol, per mol of the nitrogen atom contained in the amine compound, from the viewpoint that the effects of the present invention can be further exhibited.

The polymer of Embodiment 2 has a structure in which a substituted oxyethylene structure derived from a glycidyl ether compound is bonded to a nitrogen atom of an amino group in an amine compound in a single array (in the case of using one type of glycidyl ether compound), a block array or a random array (in the case of using two or more types of glycidyl ether compounds). The polymer of Embodiment 2 may have the structure described above, and a production method therefor is not particularly limited.

The number of repetitions (average number of moles added) of the substituted oxyethylene structure in the polymer of Embodiment 2 is preferably from 1 mol to 100 mol per mol of the nitrogen atom contained in the amine compound, from the viewpoint that the effects of the present invention can be further exhibited.

The polymer of Embodiment 3 has a structure in which both an oxyalkylene structure derived from an alkylene oxide having from 2 to 20 carbon atoms and a substituted oxyethylene structure derived from a glycidyl ether compound are bonded to a nitrogen atom of an amino group in an amine compound in a block array or a random array. The oxyalkylene structural moiety derived from an alkylene oxide having from 2 to 20 carbon atoms has a structure in which alkylene oxides are bonded in a single array (in the case of using one type of alkylene oxide), a block array or a random array (in the case of using two or more types of alkylene oxides). The substituted oxyethylene structure derived from a glycidyl ether compound has a structure in which glycidyl ether compounds are bonded in a single array (in the case of using one type of glycidyl ether compound), a block array or a random array (in the case of using two or more types of glycidyl ether compounds). The polymer of Embodiment 3 may have the structure described above, and a production method therefor is not particularly limited.

The number of repetitions (average number of moles added) of the oxyalkylene structure derived from an alkylene oxide having from 2 to 20 carbon atoms in the polymer of Embodiment 3 is preferably from 1 mol to 200 mol, more preferably from 3 mol to 100 mol, still more preferably from 5 mol to 80 mol, particularly preferably from 5 mol to 60 mol, and most preferably from 5 mol to 40 mol, per mol of the nitrogen atom contained in the amine compound, from the viewpoint that the effects of the present invention can be further exhibited.

The number of repetitions (average number of moles added) of the substituted oxyethylene structure derived from a glycidyl ether compound in the polymer of Embodiment 3 is preferably from 1 mol to 100 mol, more preferably from 1 mol to 50 mol, still more preferably from 1 mol to 30 mol, particularly preferably from 1 mol to 20 mol, and most preferably from 1 mol to 10 mol, per mol of the nitrogen atom contained in the amine compound, from the viewpoint that the effects of the present invention can be further exhibited.

The polymer contained in the draw solute according to embodiments of the present invention can be obtained by any appropriate method as long as the effects of the present invention are not impaired. Typically, the polymer contained in the draw solute according to embodiments of the present invention is obtained by adding at least one selected from the group consisting of an alkylene oxide having from 2 to 20 carbon atoms and a glycidyl ether compound to an amine compound.

Any appropriate amine compound may be adopted as the amine compound as long as the effects of the present invention are not impaired. The amine compound may be only one type of amine compound or two or more types of amine compounds.

Examples of the amine compound include an alkanolamine, an aliphatic amine, an aromatic amine, and a heterocyclic amine.

Examples of the alkanolamine include monoalkanolamines such as 2-aminoethanol, 2-methylaminoethanol, 2-ethylaminoethanol, 2-butylaminoethanol, 2-(hydroxymethylamino)ethanol, 2-(2-aminoethoxy)ethanol, 2-[(3-aminopropyl)amino]ethanol, 1-phenyl-2-aminoethanol, 1-phenyl-2-(N-methylamino)ethanol, 1-phenyl-2-(N-ethylamino)ethanol, 1-(3-hydroxyphenyl)-2-aminoethanol, 1-(4-hydroxyphenyl)-2-aminoethanol, 1-(3,4-dihydroxyphenyl)-2-aminoethanol, 1-(3-hydroxyphenyl)-2-(N-methylamino)ethanol, 1-(4-hydroxyphenyl)-2-(N-methylamino)ethanol, 1-(3,4-dihydroxyphenyl)-2-(N-methylamino)ethanol, N-(2-hydroxyethylamino)ethylenediamine, 2-(2-hydroxypropylamino)ethylamine, 2-(3-hydroxypropylamino)ethylamine, diethanolamine, 1-amino-2-propanol, 2-amino-1-propanol, 3-amino-1-propanol, 3-amino-2-phenylpropanol, 1,3-diamino-2-propanol, 4-aminobutanol, 4-methylaminobutanol, 2-dimethylaminoethanol, 2-diethylaminoethanol, 2-dibutylaminoethanol, 1-dimethylamino-2-propanol, 3-dimethylamino-1-propanol, 3-diethylamino-1-propanol, 3-dipropylamino-1-propanol, 3-dibutylamino-1-propanol, 2-dimethylamino-2-methylpropanol, 3-dimethylamino-1-butanol, 4-dibutylamino-1-butanol, and 5-diethylamino-2-pentanol; dialkanolamines such as 2-amino-1,3-propanediol, 3-amino-1,2-propanediol, 2-amino-1-phenyl-1,3-propanediol, 2-amino-2-(hydroxymethyl)-1,3-propanediol, 1-deoxy-1-(methylamino)-D-glucitol, diisopropanolamine, N-methyl-diethanolamine, N-ethyl-diethanolamine, N-isobutyldiethanolamine, 3-dimethylamino-1,2-propanediol, 3-diethylamino-1,2-propanediol, and 3-dipropylamino-1,2-propanediol; and trialkanolamines such as triethanolamine and triisopropanolamine.

Examples of the aliphatic amine include aliphatic primary amines such as methylamine, ethylamine, propylamine, isopropylamine, butylamine, 2-pentylamine, 3-pentylamine, neopentylamine, hexylamine, octylamine, 2-ethylhexylamine, nonylamine, decylamine, pentadecylamine, cetylamine, laurylamine, stearylamine, cyclopropylamine, cyclobutylamine, cyclopentylamine, cyclohexylamine, and 1-adamantanamine; aliphatic secondary amines such as dimethylamine, ethylmethylamine, diethylamine, methylpropylamine, methylisopropylamine, ethylpropylamine, ethylisopropylamine, butylmethylamine, methyl-t-butylamine, dipropylamine, diisopropylamine, ethyl-t-butylamine, N-ethyl-1,2-dimethylpropylamine, dibutylamine, diisobutylamine, di(t-butyl)amine, ethylhexylamine, dipentylamine, dihexylamine, di(2-ethylhexyl)amine, dioctylamine, didecylamine, dilaurylamine, dicetylamine, distearylamine, methylstearylamine, ethylstearylamine, butylstearylamine, methylcyclohexylamine, ethylcyclohexylamine, N-t-butylcyclohexylamine, dicyclohexylamine, and di(2-methylcyclohexyl)amine; and aliphatic polyamines such as N,N'-dimethyl-1,3-propanediamine, 1,3-pentanediamine, ethylenediamine, diethylenetriamine, triethylenetetramine, and (N,N'-di(2-aminoethyl)ethylenediamine).

Examples of the aromatic amine include aromatic primary amines such as benzylamine, phenylpropylamine, phenylbutylamine, 1,1-dimethyl-2-phenylethylamine, 3,4-dimethylbenzylamine, aniline, methylaniline, ethylaniline, propylaniline, isopropylaniline, butylaniline, laurylaniline, stearylaniline, dimethylaniline, diethylaniline, methylbenzylamine, 4,4'-methylenedianiline, naphthylamine, trimethylaniline, and 4-methylphenethylamine; aromatic secondary amines such as methylbenzylamine, ethylbenzylamine, t-butylbenzylamine, diphenylamine, and dibenzylamine; and aromatic polyamines such as N-benzyl-1,3-propanediamine, 2,4,6,-trimethyl-1,3-phenylenediamine, and 4-aminobenzylamine.

Examples of the heterocyclic amine include aziridine, azetidine, pyrrolidine, 2-methylpyrrolidine, piperidine, 2-methylpiperidine, 3-methylpiperidine, 4-methylpiperidine, 2,4-dimethylpiperidine, 3,5-dimethylpiperidine, 2,6-dimethylpiperidine, 2,2,6,6-tetramethylpiperidine, piperazine, N-methylpiperazine, N-ethylpiperazine, N-isobutylpiperazine, N-cyclohexylpiperazine, N-cyclopentylpiperazine, N-phenylpiperazine, 1-(2-pyridyl)piperazine, 1-(4-pyridyl)piperazine, 1-(2-pyrimidyl)piperazine, morpholine, pyrrole, 2-methylpyrrole, 2,4-dimethylpyrrole, 3,4-dimethylpyrrole, pyrazole, 3,5-dimethylpyrazole, imidazole, 3-methylindole, and 2-phenylindole.

The amine compound is preferably an amino compound to which at least one selected from the group consisting of an alkylene oxide having from 2 to 20 carbon atoms and a glycidyl ether compound can be added.

A preferred embodiment of the amine compound is represented by General Formula (4a) or General Formula (4b). When the amine compound represented by General Formula (4a) is adopted as the amine compound, the polymer contained in the draw solute according to embodiments of the present invention typically has an amine compound-derived structure represented by General Formula (1a). When the amine compound represented by General Formula (4b) is adopted as the amine compound, the polymer contained in the draw solute according to embodiments of the present invention typically has an amine compound-derived structure represented by General Formula (1b).

[Chem. 9]

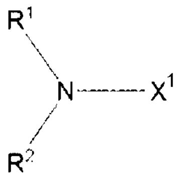
(4a)

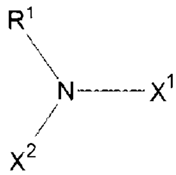
(4b)

$R^1$ and $R^2$ in General Formulae (4a) and (4b) are organic groups and may contain a heteroatom, and $R^1$ and $R^2$ in General Formula (1a) may form a ring structure. Examples of the heteroatom include an oxygen atom, a nitrogen atom, a sulfur atom, a silicon atom, and a phosphorus atom. $R^1$ and $R^2$ may be the same or different.

In General Formulae (4a) and (4b), $X^1$ and $X^2$ are hydrogen atoms or $-R^4-OH$, and $X^1$ and $X^2$ may be the same or different.

$R^4$ in General Formulae (4a) and (4b) is an alkylene group having from 2 to 20 carbon atoms. $R^4$ is an alkylene group having from 2 to 10 carbon atoms, more preferably an alkylene group having from 2 to 8 carbon atoms, still more

preferably an alkylene group having from 2 to 6 carbon atoms, particularly preferably an alkylene group having from 2 to 4 carbon atoms, from the viewpoint that the effects of the present invention can be further exhibited. Specific examples of $R^4$ include an ethylene group, a propylene group, and a butylene group.

The amine compound represented by General Formula (4a) is preferably a monoalkanolamine, an aliphatic secondary amine, or an aromatic secondary amine. Examples of these amines include those described above.

The amine compound represented by General Formula (4b) is preferably a dialkanolamine, an aliphatic primary amine, or an aromatic primary amine. Examples of these amines include those described above.

Another preferred embodiment of the amine compound is represented by General Formula (4c). When the amine compound represented by General Formula (4c) is adopted as the amine compound, the polymer contained in the draw solute according to embodiments of the present invention typically has an amine compound-derived structure represented by General Formula (1c).

[Chem. 10]

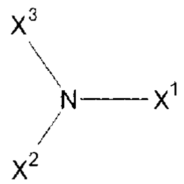

(4c)

In General Formula (4c), $X^1$, $X^2$, and $X^3$ are hydrogen atoms or $-R^4-OH$, and $X^1$, $X^2$, and $X^3$ may be the same or different.

$R^4$ in General Formula (4c) is an alkylene group having from 2 to 20 carbon atoms. $R^4$ is an alkylene group having from 2 to 10 carbon atoms, more preferably an alkylene group having from 2 to 8 carbon atoms, still more preferably an alkylene group having from 2 to 6 carbon atoms, particularly preferably an alkylene group having from 2 to 4 carbon atoms, from the viewpoint that the effects of the present invention can be further exhibited. Specific examples of $R^4$ include an ethylene group, a propylene group, and a butylene group.

The amine compound represented by General Formula (4c) is preferably a trialkanolamine. Examples of these amines include those described above.

As the alkylene oxide having from 2 to 20 carbon atoms, any appropriate alkylene oxide may be adopted as long as the number of carbon atoms is within the range of from 2 to 20 and the effects of the present invention are not impaired. The alkylene oxide having from 2 to 20 carbon atoms may be only one type of alkylene oxide or two or more types of alkylene oxides. From the viewpoint that the effects of the present invention can be further exhibited, the alkylene oxide having from 2 to 20 carbon atoms is preferably an alkylene oxide having from 2 to 10 carbon atoms, more preferably an alkylene oxide having from 2 to 8 carbon atoms, still more preferably an alkylene oxide having from 2 to 6 carbon atoms, and particularly preferably an alkylene oxide having from 2 to 4 carbon atoms. Typical examples of the alkylene oxide having from 2 to 20 carbon atoms include ethylene oxide (EO), propylene oxide (PO), and butylene oxide (BO).

The glycidyl ether compound is preferably represented by General Formula (2), as described above.

[Chem. 11]

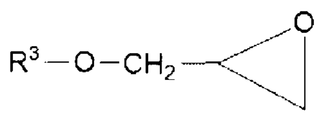

(2)

$R^3$ in General Formula (2) is an organic group, and may contain a heteroatom. Examples of the heteroatom include an oxygen atom, a nitrogen atom, a sulfur atom, a silicon atom, and a phosphorus atom.

Specific examples of $R^3$ include alkyl groups such as a methyl group, an ethyl group, a propyl group, an isopropyl group, a butyl group, a 2-pentyl group, a 3-pentyl group, a neopentyl group, a hexyl group, an octyl group, a 2-ethylhexyl group, a nonyl group, a decyl group, a pentadecyl group, a cetyl group, a lauryl group, a stearyl group, a cyclopropyl group, a cyclobutyl group, a cyclopentyl group, a cyclohexyl group, and a 1-adamantane group; and aryl groups such as a phenyl group, a benzyl group, a phenylpropyl group, a phenylbutyl group, a 1,1-dimethyl-2-phenylethyl group, and a 3,4-dimethylbenzyl group.

Any appropriate conditions can be adopted as conditions for a reaction of adding at least one selected from the group consisting of an alkylene oxide having from 2 to 20 carbon atoms and a glycidyl ether compound to an amine compound, as long as the effects of the present invention are not impaired. As such conditions, for example, an amine

compound and at least one selected from the group consisting of an alkylene oxide having from 2 to 20 carbon atoms and a glycidyl ether compound can be added by heating as they are or after they are diluted with a solvent as necessary.

Any appropriate temperature may be adopted as the heating temperature as long as the effects of the present invention are not impaired. The heating temperature is preferably from 0°C to 200°C, more preferably from 20°C to 180°C, and still more preferably from 50°C to 150°C.

A catalyst may be used in the addition reaction. Examples of the catalyst include alkali catalysts such as potassium hydroxide (KOH) and sodium hydroxide (NaOH). In the case of using a catalyst, for example, the catalyst is added to an amine compound, and then at least one selected from the group consisting of an alkylene oxide having from 2 to 20 carbon atoms and a glycidyl ether compound is fed into the reaction system. An amount of the catalyst to be used is preferably from 0 mass% to 5.0 mass%, and more preferably from 0.1 mass% to 3.0 mass%, relative to the amine compound.

As a feeding method, any appropriate method may be adopted depending on the purpose as long as the effects of the present invention are not impaired.

In the case of obtaining the polymer of Embodiment 1, when two or more types of alkylene oxides are subjected to block addition polymerization, it is preferable to feed the respective alkylene oxides in order (sequential feeding). In the case of obtaining the polymer of Embodiment 1, when two or more types of alkylene oxides are subjected to random addition polymerization, it is preferable to feed the alkylene oxides after mixing them.

In the case of obtaining the polymer of Embodiment 2, when two or more types of glycidyl ether compounds are subjected to block addition polymerization, it is preferable to feed the glycidyl ether compounds in order (sequential feeding). In the case of obtaining the polymer of Embodiment 2, when two or more types of glycidyl ether compounds are subjected to random addition polymerization, it is preferable to feed the glycidyl ether compounds after mixing them.

In the case of obtaining the polymer of Embodiment 3, when the alkylene oxide and the glycidyl ether compound are subjected to block addition polymerization, it is preferable to feed the alkylene oxide and the glycidyl ether compound in order (sequential feeding). In the case of obtaining the polymer of Embodiment 3, when the alkylene oxide and the glycidyl ether compound are subjected to random addition polymerization, it is preferable to feed the alkylene oxide and the glycidyl ether compound after mixing them. In Embodiment 3, when two or more types of alkylene oxides are used, the feeding methods for obtaining the polymer of Embodiment 1 may be combined, and when two or more types of glycidyl ether compounds are used, the feeding methods for obtaining the polymer of Embodiment 2 may be combined.

After feeding at least one selected from the group consisting of an alkylene oxide having from 2 to 20 carbon atoms and a glycidyl ether compound, a reaction rate can be further increased by aging for a predetermined time until the reaction is sufficiently performed. Such an aging time is preferably from 0.1 hours to 10 hours, and more preferably from 1 hour to 5 hours.

After the addition reaction, the reaction product may be neutralized with an acid such as acetic acid, lactic acid, or phosphoric acid. An amount of the acid is preferably from 0 mass% to 10.0 mass%, and more preferably from 0 mass% to 5.0 mass%, relative to the amine compound. A step of removing impurities may be performed. Examples of such a removal method include centrifugation, filtration, evaporation, and distillation. In addition, light impurities can also be removed under reduced pressure, preferably at from 60°C to 200°C, and more preferably at from 80°C to 150°C. A concentration of the remaining light impurities (alkylene oxide, glycidyl ether compound, etc.) is preferably from 0 mass% to 2 mass%, more preferably from 0 mass% to 1 mass%.

The draw solute is preferably stored under a nitrogen atmosphere, and an antioxidant may be added to improve stability. Any appropriate antioxidant may be adopted as the antioxidant as long as the effects of the present invention are not impaired. Among such antioxidants, examples of antioxidants suitable for addition to the draw solute include phenolic OH-containing compounds such as dibutylhydroxytoluene and butylhydroxyanisole; ascorbates such as ascorbic acid and derivatives thereof; tocopherols such as tocopherol and tocotrienol; erythorbates such as erythorbic acid and sodium erythorbate; diphenylamine-based compounds such as 4,4'-bis($\alpha$,$\alpha$-dimethylbenzyl)diphenylamine, 4-isopropylamino-diphenylamine, and 4-[(4-methyl-2-pentyl)amino]diphenylamine; phenylenediamine-based compounds such as N,N'-di-sec-butyl-1,4-phenylenediamine, N,N'-diphenyl-1,4-phenylenediamine, and N,N'-di-2-naphthyl-1,4-phenylenediamine; aromatic secondary amine-based compounds such as N-phenyl-1-naphthylamine; and amine-ketone-based compounds such as 6-ethoxy-2,2,4-trimethyl-1,2-dihydroquinoline. An amount of the antioxidant to be added is preferably from 0 ppm to 10000 ppm, more preferably from 100 ppm to 1000 ppm, and still more preferably from 100 ppm to 500 ppm, relative to a total amount of the draw solute.

A viscosity at 25°C of the draw solute according to embodiments of the present invention is preferably 500 mPa·s or less, more preferably 400 mPa·s or less, still more preferably 300 mPa·s or less, yet still more preferably 280 mPa·s or less, particularly preferably 260 mPa·s or less, and most preferably 240 mPa·s or less. A lower limit of the viscosity is preferably as small as possible, but is practically, for example, 10 mPa·s or more.

Draw Solution

A draw solution according to embodiments of the present invention contains the draw solute according to embodiments of the present invention. A content of the draw solute is preferably from 20 mass% to 100 mass%, more preferably from 50 mass% to 100 mass%, and still more preferably from 75 mass% to 100 mass%, relative to a total amount of the draw solution.

The draw solution according to embodiments of the present invention may contain a solvent. The solvent may be appropriately selected depending on conditions for the forward osmosis membrane method using the draw solution. As the solvent, at least one selected from the group consisting of water, methanol, and ethanol can be preferably used. The solvent is more preferably the same solvent as that of the solution targeted to be treated (sometimes referred to as a feed solution).

A content of the solvent is preferably from 0 mass% to 80 mass% relative to the total amount of the draw solution.

The draw solution according to embodiments of the present invention may contain a draw solute(s) (an additional draw solute(s)) other than the draw solute according to embodiments of the present invention. However, a content of the additional draw solute(s) is preferably 20 mass% or less relative to the total amount of the draw solute in the draw solution.

Thus, the draw solution according to embodiments of the present invention is preferably composed of the draw solute according to embodiments of the present invention, a solvent(s) of any type, and an additional draw solute(s) of any type, and more preferably composed of the draw solute according to embodiments of the present invention and a solvent(s) of any type.

The draw solution according to embodiments of the present invention preferably has a cloud point (lower critical solution temperature). The cloud point means a temperature at which a transparent or translucent liquid is changed in temperature to cause phase separation and as a result, the liquid becomes opaque. The draw solution having a cloud point can be heated to cause phase separation of the draw solute and the solvent.

The cloud point of the draw solution can be typically adjusted as appropriate by changing the composition of the draw solute according to embodiments of the present invention, for example, the type of the amine compound, the type and content proportion of the oxyalkylene structure derived from an alkylene oxide having from 2 to 20 carbon atoms, the type and content proportion of the substituted oxyethylene structure derived from a glycidyl ether compound, and the like. Therefore, a draw solution having an appropriate cloud point can be selected according to the application. For example, when the forward osmosis membrane method is applied to water treatment using low-temperature waste heat of a factory, it is preferable that the draw solution does not undergo phase separation at a temperature around room temperature at which the forward osmosis membrane treatment is performed, and the draw solution undergoes phase separation at a temperature around the low-temperature waste heat of the factory. A suitable cloud point of the draw solution used in such an application varies depending on the concentration of the draw solute in the draw solution, and for example, the cloud point in a case where the draw solute is made into a 50 mass% aqueous solution is preferably from 20°C to 90°C, and more preferably from 30°C to 90°C.

Water Treatment Method

In the forward osmosis membrane method, a feed solution and a draw solution are brought into contact with each other through a semipermeable membrane, and a solvent moves from the feed solution side having a low osmotic pressure to the draw solution having a high osmotic pressure. As the solvent moves, the concentration of the draw solution gradually decreases. Therefore, it is necessary to separate the draw solute and the solvent contained in the draw solution, for continuously performing the forward osmosis membrane method. With the draw solution having a cloud point, the phase separation of the draw solute and the solvent can be caused by heating.

In the forward osmosis membrane method using the draw solution having a cloud point, the forward osmosis membrane method can be continuously performed by repeating the following treatment, for example.

- The feed solution is placed on one side of the semipermeable membrane and the draw solution is placed on the other side thereof, each in contact with the semipermeable membrane, allowing the solvent to move from the feed solution side through the semipermeable membrane to the draw solution side.
- The draw solution having a reduced concentration is taken out and heated to cause phase separation of the draw solute and the solvent.
- The draw solute obtained by phase separation is again circulated to the other side.
- The solvent obtained by phase separation is further purified using, for example, a nanofiltration membrane (NF membrane) to obtain a target treated product (purified water or the like).

Any appropriate temperature may be set as the temperature at which the forward osmosis membrane method is performed. Such a temperature is usually around room temperature, and is preferably, for example, from 5°C to 40°C.

Any appropriate semipermeable membrane may be adopted as the semipermeable membrane (Membrane) to be used in the forward osmosis membrane method. For maintaining strength of the membrane, such a semipermeable membrane including, in combination, a dense active layer that determines selective permeability of the membrane and a porous support layer is preferably used. Since the support layer is more likely to adsorb foulants than the active layer, the active layer of the semipermeable membrane is generally preferably provided on the feed solution side from the viewpoint of reducing membrane fouling.

## Examples

Hereinafter, the present invention will be described more specifically with reference to Examples and Comparative Examples. However, the present invention is not limited to these examples. In the following description, "parts" and "%" are on a mass basis unless otherwise specified.

### Cloud point evaluation

An aqueous solution containing 50 mass% of the obtained draw solute was prepared and sealed in a screw vial. This was allowed to stand in an oven at 97°C for 1 hour for layer separation, and then cooled while measuring the internal temperature, and the temperature at which formation of a uniform layer was visually observed was defined as the cloud point.

### Phase Separability Evaluation

An aqueous solution containing 50 mass% of the obtained draw solute was prepared and sealed in a screw vial. This was allowed to stand in an oven at 70°C or 85°C overnight to reach equilibrium sufficiently, and then the upper phase and the lower phase were each collected at three points in an amount of about 1 g each and placed in aluminum cups. The aluminum cup was allowed to stand in an oven at 97°C for 2 hours to be dried, and the concentrations of the draw solutes in the upper phase and the lower phase were calculated from the difference between the masses before and after drying. The phase having a high draw solute concentration is a polymer (draw solute)-rich phase.

### Osmotic Pressure Evaluation

Aqueous solutions containing 40 mass%, 50 mass%, and 60 mass% of the obtained draw solute were prepared, and about 1 mL of each of the solutions was collected in a specific sample cup, and the water activity at 25°C was measured using a water-activity measurement apparatus (AquaLab Series4 TDL). The measurement was performed from three to five times, and an average value thereof was taken as the water activity measurement value. Using the obtained water activity measurement value, the osmotic pressure (bar) was calculated by the following calculation formula and unit conversion.

Osmotic pressure (bar) = (1 - [water activity measurement value]/18.015) × 10 × 8.31 × (273.15 + [measurement temperature])

### Water Transport Capacity Evaluation

The water transport capacity was calculated by the following formula.

Water transport capacity = <permeated water mass>/<polymer mass> × 100 = (<mass after water permeation> - <initial mass>)/<polymer mass> × 100 = (<mass after water permeation> - <polymer concentration after water permeation>/<initial polymer concentration> × <mass after water permeation>)/(<mass after water permeation> × <polymer concentration after water permeation>)× 100 = (<initial polymer concentration> - <polymer concentration after water permeation>)/(<initial polymer concentration> × <polymer concentration after water permeation>) × 10000

In the formula, the "initial polymer concentration" indicates the concentration of the polymer-rich phase in the phase separability evaluation, and the "polymer concentration after water permeation" indicates the polymer concentration when the osmotic pressure became 48 bar, and was calculated by back calculation from the correlative formula of the osmotic pressure at the polymer concentration measured in the osmotic pressure evaluation (provided that the osmotic pressure at 0 mass% is 0 bar).

Viscosity Evaluation

The viscosity of the draw solute was measured using an E-type viscometer (TVE-25L, available from Toki Sangyo Co., Ltd.) at 25°C and a rotation speed of 2.0 rpm, 2.5 rpm, or 4.0 rpm with a cone plate type of 1° × R24.

Example 1

Dibutylaminoethanol (132.5 g) and 48% KOH aqueous solution (7.73 g) were charged into a 1 L autoclave at room temperature. Then, pressure reduction was performed until the absolute pressure reached 10 kPa while nitrogen gas was bubbled at 20 mL/min. Thereafter, the temperature was raised to 125°C, and the mixture was stirred for 5 hours. After the pressure was raised to 0.15 MPa, bubbling was stopped, and 370.4 g of ethylene oxide (hereinafter sometimes referred to as EO) was introduced under pressure over 2 hours, followed by aging for 2 hours.

Of the obtained intermediate, 180.0 g was charged into a glass separable flask at room temperature, the gaseous phase portion was then replaced with nitrogen gas, the temperature was raised to 100°C, 41.1 g of phenyl glycidyl ether (hereinafter sometimes referred to as PhGE) was added dropwise over 3 hours, and the mixture was aged for 3 hours.

After the temperature was lowered to 60°C, 4.5 g of 50% lactic acid was charged to obtain a draw solute (1).

The draw solute (1) had a structure in which EO and PhGE were added to dibutylamine, the EO and PhGE were in a block array, the number of moles of EO added to 1 mol of dibutylaminoethanol was 12, the number of moles of PhGE added to 1 mol of dibutylaminoethanol was 1, and the number average molecular weight Mn was 800.

The results are shown in Table 1.

Example 2

Of the intermediate obtained in Example 1, 180.0 g was charged into a glass separable flask at room temperature, the gaseous phase portion was then replaced with nitrogen gas, the temperature was raised to 100°C, 50.7 g of 2-ethylhexyl glycidyl ether (hereinafter sometimes referred to as EHGE) was added dropwise over 3 hours, and the mixture was aged for 3 hours.

After the temperature was lowered to 60°C, 4.5 g of 50% lactic acid was charged to obtain a draw solute (2).

The draw solute (2) had a structure in which EO and EHGE were added to dibutylamine, the EO and EHGE were in a block array, the number of moles of EO added to 1 mol of dibutylaminoethanol was 12, the number of moles of EHGE added to 1 mol of dibutylaminoethanol was 1, and the number average molecular weight Mn was 850.

The results are shown in Table 1.

Example 3

Triethanolamine (254.1 g) and 48% KOH aqueous solution (3.6 g) were charged into a 1 L autoclave at room temperature. Then, pressure reduction was performed until the absolute pressure reached 10 kPa while nitrogen gas was bubbled at 20 mL/min. Thereafter, the temperature was raised to 125°C, and the mixture was stirred for 5 hours. After the pressure was raised to 0.20 MPa, bubbling was stopped, and 525.1 g of EO was introduced under pressure over 2 hours, followed by aging for 2 hours.

Of the obtained intermediate, 546 g was charged into a 1 L autoclave at room temperature, the gaseous phase portion was then replaced with nitrogen gas, the temperature was raised to 125°C, 429.6 g of butylene oxide (hereinafter sometimes referred to as BO) was then added dropwise over 2 hours, and the mixture was aged for 5 hours and then aged at 140°C for 7 hours.

After the temperature was lowered to 60°C, 4.0 g of 50% lactic acid was charged to obtain a draw solute (3).

The draw solute (3) had a structure in which EO and BO were added to triethylamine, the EO and BO were in a block array, the number of moles of EO added to 1 mol of triethanolamine was 10, the number of moles of BO added to 1 mol of triethanolamine was 5, and the number average molecular weight Mn was 800.

The results are shown in Table 1.

Example 4

Triethanolamine (149.7 g) and 48% KOH aqueous solution (1.0 g) were charged into a 2 L autoclave at room temperature. Then, pressure reduction was performed until the absolute pressure reached 10 kPa while nitrogen gas was bubbled at 20 mL/min. Thereafter, the temperature was raised to 125°C, and the mixture was stirred for 5 hours. After the pressure was raised to 0.2 MPa, bubbling was stopped, and 751.3 g of EO and 426.8 g of BO were introduced under pressure over 10 hours, followed by aging for 4 hours.

After the temperature was lowered to 60°C, 0.56 g of 50% lactic acid was charged to obtain a draw solute (4).

The draw solute (4) had a structure in which EO and BO were added to triethylamine, the EO and BO were in a random array, the number of moles of EO added to 1 mol of triethanolamine was 20, the number of moles of BO added to 1 mol of triethanolamine was 6, and the number average molecular weight Mn was 1300.

The results are shown in Table 1.

[Table 1]

| | Cloud point | Phase separability | | Osmotic pressure | | | | Polymer concentration after water permeation | Water transport capacity | Viscosity |
|---|---|---|---|---|---|---|---|---|---|---|
| | | Upper phase | Lower phase | 0% | 40% | 50% | 60% | | | |
| | °C | mass% | mass% | bar | bar | bar | bar | mass% | % | mPa·s |
| Example 1 | 41.6 | 8.0 | 84.0 | 0.0 | 55.0 | 70.5 | 95.9 | 34.9 | 167.5 | 230 |
| Example 2 | 41.6 | 87.3 | 5.9 | 0.0 | 30.1 | 37.2 | 57.7 | 55.3 | 66.3 | 120 |
| Example 3 | 49.5 | 3.5 | 80.0 | 0.0 | 19.0 | 29.2 | 45.4 | 60.5 | 40.2 | 220 |
| Example 4 | 73.9 | 5.5 | 70.9 | 0.0 | 27.8 | 54.2 | 82.1 | 47.7 | 68.8 | 270 |

Industrial Applicability

The draw solution containing the draw solute according to embodiments of the present invention can be applied to various applications using the forward osmosis membrane method. In particular, water treatment apparatuses and power generation apparatuses are applications where the use of the forward osmosis membrane method is expected, and the draw solution containing the draw solute according to embodiments of the present invention can be suitably used for these applications.

## Claims

1. A draw solute comprising a polymer having an amine compound-derived structure and at least one structure selected from the group consisting of an oxyalkylene structure derived from an alkylene oxide having from 2 to 20 carbon atoms and a substituted oxyethylene structure derived from a glycidyl ether compound.

2. The draw solute according to claim 1, wherein the amine compound-derived structure is represented by General Formula (1a) or General Formula (1b):

[Chem. 1]

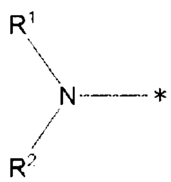 (1a)

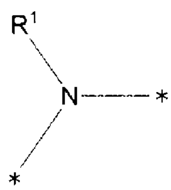 (1b)

where $R^1$ and $R^2$ in General Formulae (1a) and (1b) are organic groups and optionally contain a heteroatom, and $R^1$ and $R^2$ in General Formula (1a) optionally form a ring structure; and further, a notation "N-*" in General Formulae (1a) and (1b) means a structure from a nitrogen atom to a terminal of a bond extending therefrom.

3. The draw solute according to claim 1, wherein the amine compound-derived structure is represented by General

Formula (1c):

[Chem. 2]

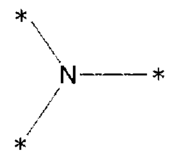 (1c)

where a notation "N-*" in General Formula (1c) means a structure from a nitrogen atom to a terminal of a bond extending therefrom.

**4.** The draw solute according to claim 1, wherein the glycidyl ether compound is represented by General Formula (2), and the substituted oxyethylene structure derived from a glycidyl ether compound is represented by General Formula (3):

[Chem. 3]

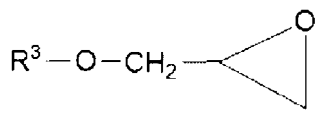 (2)

where $R^3$ in General Formula (2) is an organic group, and optionally contains a heteroatom,

[Chem. 4]

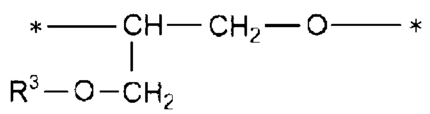 (3)

where $R^3$ in General Formula (3) is an organic group, and optionally contains a heteroatom; and further, in General Formula (3), a notation "C-*" means a structure from a carbon atom to a terminal of a bond extending therefrom, and a notation "O-*" means a structure from an oxygen atom to a terminal of a bond extending therefrom.

**5.** The draw solute according to claim 1, wherein a viscosity at 25°C is 500 mPa·s or less.

**6.** A draw solution comprising the draw solute according to any one of claims 1 to 5.

**7.** A water treatment method using the draw solution according to claim 6.

# INTERNATIONAL SEARCH REPORT

International application No.
**PCT/JP2024/005363**

## A. CLASSIFICATION OF SUBJECT MATTER

***B01D 61/00***(2006.01)i; ***C02F 1/44***(2023.01)i; ***C08G 65/02***(2006.01)i; ***C08G 65/26***(2006.01)i
FI: B01D61/00 500; C02F1/44 D; C08G65/02; C08G65/26

According to International Patent Classification (IPC) or to both national classification and IPC

## B. FIELDS SEARCHED

Minimum documentation searched (classification system followed by classification symbols)

B01D61/00; C02F1/44; C08G65/02; C08G65/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

## C. DOCUMENTS CONSIDERED TO BE RELEVANT

| Category* | Citation of document, with indication, where appropriate, of the relevant passages | Relevant to claim No. |
|---|---|---|
| X | WO 2022/215624 A1 (NIPPON SHOKUBAI CO., LTD.) 13 October 2022 (2022-10-13) claims, paragraphs [0007], [0013]-[0015], [0035], [0060] | 1-7 |
| X | WO 2020/045525 A1 (NIPPON SHOKUBAI CO., LTD.) 05 March 2020 (2020-03-05) claims, paragraphs [0008], [0012], [0041] | 1, 5-7 |
| X | US 2018/0078901 A1 (NRGTEK, INC.) 22 March 2018 (2018-03-22) claims, paragraphs [0013]-[0018] | 1, 5-7 |
| A | JP 2019-529077 A (TREVI SYSTEMS INC.) 17 October 2019 (2019-10-17) entire text, all drawings | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/005363**

| Patent document cited in search report | Publication date (day/month/year) | Patent family member(s) | Publication date (day/month/year) |
|---|---|---|---|
| WO 2022/215624 A1 | 13 October 2022 | EP 4289500 A1<br>claims, paragraphs [0008], [0014]-[0016], [0039], [0066]<br>CN 117120151 A | |
| WO 2020/045525 A1 | 05 March 2020 | US 2021/0253450 A1<br>claims, paragraphs [0008], [0020], [0060]<br>EP 3845296 A1 | |
| US 2018/0078901 A1 | 22 March 2018 | WO 2018/057423 A1<br>CA 3037695 A1 | |
| JP 2019-529077 A | 17 October 2019 | US 2019/0224623 A1<br>entire text, all drawings<br>WO 2018/045393 A2<br>TW 201916927 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6172385 B
- JP 7162308 B